# EUROPÄISCHE PATENTSCHRIFT

(11) **EP 2 961 907 B1**
(45) Veröffentlichungstag und Bekanntmachung des Hinweises auf die Patenterteilung: **09.05.2018**
(21) Anmeldenummer: 14824792.7
(22) Anmeldetag: 10.12.2014
(51) Int. Cl.: E06B 3/673

(54) **VERFAHREN UND VORRICHTUNG ZUM FÜLLEN EINER RANDFUGE EINES ISOLIERGLASELEMENTS MIT EINER VERSIEGELUNGSMASSE**
METHOD AND DEVICE FOR FILLING AN EDGE JOINT OF AN INSULATING GLASS ELEMENT WITH A SEALING COMPOUND
PROCÉDÉ ET DISPOSITIF DE REMPLISSAGE D'UN JOINT DE BORD D'UN ÉLÉMENT DE VITRAGE ISOLANT AVEC UNE MATIÈRE DE SCELLEMENT

(30) Priorität: 10.12.2013 DE 102013020557
(43) Veröffentlichungstag der Anmeldung: 06.01.2016
(73) Patentinhaber: LISEC Austria GmbH, 3353 Seitenstetten (AT)
(72) Erfinder: MADER, Leopold, A-3364 Neuhofen/Ybbs (AT)
(74) Vertreter: Henkel, Breuer & Partner
(86) Internationale Anmeldenummer: PCT/EP2014/077174
(87) Internationale Veröffentlichungsnummer: WO 2015/086658

(56) Entgegenhaltungen:
- EP-A1- 1 650 176
- EP-A1- 1 650 176
- DE-A1- 2 309 295
- DE-A1- 2 309 295
- DE-A1- 4 136 653
- DE-A1- 4 136 653

## Beschreibung

Die Erfindung betrifft ein Verfahren und eine Vorrichtung zum Füllen einer Randfuge eines Isolierglaselements mit einer Versiegelungsmasse sowie eine Steuereinrichtung für eine Vorrichtung zum Füllen einer Randfuge eines Isolierglaselements mit einer Versiegelungsmasse.

Isolierglaselemente können aus zwei oder mehr Glasscheiben und einem jeweils zwischen die beiden einander zugewandten Glasflächen von jeweils zwei gegenüberliegenden Glasscheiben eingebrachten, einen geschlossenen Rahmen bildenden Abstandhalter aufgebaut sein. Zwei-Scheiben-Isolierglaselemente besitzen demnach eine Randfuge, die sich um den Umfang des Isolierglaselements erstreckt, und Mehr-Scheiben-Isolierglaselemente weisen mitunter mehr als eine solche Randfuge auf. Die Randfugen eines Mehr-Scheiben-Isolierglaselementes können nacheinander mit Versiegelungsmasse gefüllt werden, sie können jedoch auch gleichzeitig (parallel oder versetzt) versiegelt werden.

Die das jeweilige Isolierglaselement bildenden Glasscheiben können kongruent oder inkongruent sein. Isolierglaselemente mit inkongruenten Glasscheiben werden als Stufenelemente bezeichnet. Die das Isolierglaselement aufbauenden Scheiben können Rechteckform besitzen oder beliebige ("konturierte") Formen aufweisen. Rund- und Giebelbogenformen sind übliche von der Rechteckform abweichende Formen von Isolierglaselementen.

Die Versiegelung von Isolierglaselementen erfolgt dadurch, dass in die Randfuge, die am Außenumfang des Isolierglaselements freibleibt, nachdem die Glasscheiben unter Zwischenfügung des Abstandhalterrahmens zusammengefügt sind, vorzugsweise vollständig mit einer Versiegelungsmasse gefüllt wird und die Masse nach dem Einbringen verfestigt.

Als Versiegelungsmasse kann beispielsweise heiß verarbeitetes thermoplastisches Material auf Polyisobutylenbasis oder abbindendes, reaktives Material auf Silikon-, Polysulfid- oder Polyurethanbasis zum Einsatz kommen. Die Aufgabe der Versiegelungsmasse besteht darin, in verfestigtem Zustand dem Isolierglaselement mechanische Stabilität zu verleihen und die Diffusion von Wasser in den durch die Glasscheiben und den Abstandhalterrahmen abgeschlossenen Hohlraum des Isolierglaselementes zu unterdrücken.

Die zu versiegelnden Isolierglaselemente können sich während des Versiegelungsvorganges in beliebiger Lage befinden. Bei maschinellen Verfahren ist es üblich, die zu versiegelnden Isolierglaselemente im Wesentlichen vertikal zu lagern. Zum Zwecke der Erläuterung wird die Versiegelung am Beispiel eines im Wesentlichen vertikal gelagerten Zwei-Scheiben-Isolierglaselements mit kongruenten rechteckigen Scheiben dargestellt. Die Erfindung ist aber entsprechend auf die Versiegelung von Mehr-Scheiben-Isolierglaselementen, Stufenelementen und Isolierglaselementen aus konturierten Glasscheiben sowie auf die Versiegelung von horizontal oder schräg gelagerten Isolierglaselementen entsprechend anwendbar.

Bei Verfahren, die ein manuelles oder im Wesentlichen manuelles Einbringen des Dichtungsmaterials vorsehen, ist das zu versiegelnde Isolierglaselement immer horizontal liegend gelagert. Zur Unterstützung des manuellen Verfahrens insbesondere bei großformatigen Isolierglasscheiben sind Hilfsaggregate in Form eines Lagertisches für die Isolierglasscheibe bekannt, mit dem die horizontal gelagerte Isolierglasscheibe um eine vertikale Achse in der Ebene der Scheibe gedreht werden kann, damit der Bediener nicht um die Scheibe herumlaufen muss (siehe z.B. AT 364803). Falls beim manuellen Versiegeln Stoßstellen auftreten, die nicht in einem Eckbereich liegen, wird üblicherweise so vorgegangen, dass nach einer Unterbrechung das Einfüllen der weiteren Versiegelung am Ende einer bereits in der Randfuge abgelegten Versiegelungsmaterialraupe begonnen und in derselben Richtung fortgesetzt wird, in der das Versiegelungsmaterial zuvor eingebracht wurde. Dabei wird die Isolierglasscheibe entweder gar nicht bewegt oder allenfalls in der Horizontalebene gedreht. Bei der manuellen Versiegelung werden Stoßstellen typischerweise dadurch abgedichtet, dass zusätzliche bzw. überschüssige Versiegelungsmasse an der Stoßstelle einfach eingepresst oder aber durch eine Mischbewegung der Versiegelungsdüse so eingebracht wird, dass sich das Material beidseitig der Stoßstelle vermischt. Der Bewegungsablauf des manuellen Verfahrens erfordert eine große Erfahrung und ist nicht oder nur mit sehr großem apparatetechnischen Aufwand zu automatisieren. Außerdem ist die Ausbildung der Stoßstellen zeitraubend und führt häufig trotzdem zu Lufteinschlüssen. Auch bei automatischen Verfahren führen eine Versiegelungsdüse und das zu versiegelnde Isolierglaselement zum Füllen der Randfuge mit Versiegelungsmasse eine Relativbewegung zueinander aus. Die Versiegelungsdüse überstreicht den gesamten Scheibenrand am Umfang des Versiegelungselements und gibt dabei einen Strang von Versiegelungsmasse in die Randfuge ab. Wenn die in die Randfuge eingebrachte Versiegelungsmassenraupe ohne Unterbrechung und während einer kontinuierlichen Bewegung von der Versiegelungsdüse abgegeben wird, ergibt sich eine Stoßstelle oder eine Verbindungsstelle, die aus dem Anfang und dem Ende des Stranges aus Versiegelungsmasse gebildet wird. Diese Stoßstelle kann sich im Bereich einer Ecke oder an einer von den Ecken entfernten Position befinden.

Die Relativbewegung zwischen der Versiegelungsdüse und dem zu versiegelnden Isolierglaselement kann auf folgende an sich bekannte Arten erzeugt werden:
a) das zu versiegelnde Isolierglaselement kann während des Einbringens der Versiegelungsmasse fixiert sein, während die Versiegelungsdüse aktiv um den Umfangsrand des Isolierglaselements herumbewegt wird. Eine entsprechende Vorrichtung ist in der WO 2013/056288 A2 offenbart. Die die Versiegelungsmasse ausstoßende Versiegelungsdüse ist bei dieser Vorrichtung über einem Schlitten an einem Führungsbalken in der Vertikalrichtung auf- und ab verschiebbar und um eine zur Ebene der Glasscheiben des Isolierglaselements normale Achse schwenk- bzw. drehbar. Der Führungsbalken ist in einer zu den Glasscheiben parallelen Ebene so verstellbar, dass die Versiegelungsdüse um den Umfangsrand des in einer im Wesentlichen vertikalen Position gehaltenen Isolierglaselements herum bewegt werden kann, um eine Versiegelungsmassenraupe in die geraden Längsabschnitte der Randfuge und die Eckbereiche zu legen und die Randfuge so zu füllen. Dabei wird eine translatorische Bewegung der Versiegelungsdüse entlang den Längsabschnitten im Bereich der Ecken mit Schwenkbewegungen kombiniert.
b) die Versiegelungsdüse ist während des Versiegelungsvorganges fixiert und der Umfangsrand des zu versiegelnden Isolierglaselementes wird durch eine entsprechende Bewegung des horizontal gelagerten Isolierglaselements an der Versiegelungsdüse vorbeibewegt. Eine solche Vorrichtung ist aus der US 8,435,367 B2 bekannt.
c) die Bewegung der Versiegelungsdüse ist mit der Bewegung des zu versiegelnden Isolierglaselements kombiniert. Beispielsweise kann die Versiegelungsdüse entlang von zwei parallelen Randfugenabschnitten bewegt werden, während das zu versiegelnde Isolierglaselement still steht, und die beiden dazu senkrechten Randfugenabschnitte werden gefüllt, während die Versiegelungsdüse still steht, aber das Isolierglaselement entlang diesen Richtungen bewegt wird.

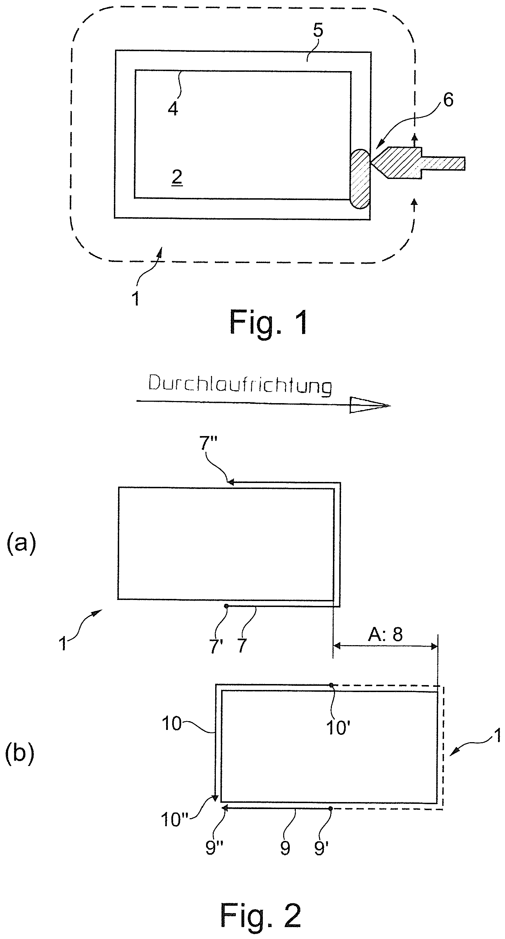

Wenn die Versiegelungsmasse in einer von einer Position in einem Eckbereich ausgehenden kontinuierlichen Bewegung in die Randfuge eingebracht wird, gibt es nur eine Stoßverbindung der Versiegelungsmassenraupe. Eine solche Lösung mit Stoßverbindung im Eckbereich und kontinuierlicher Einbringung der Versiegelungsmasse ist aus später noch erläuterten Gründen nach Möglichkeit bevorzugt und ist in Figur 1 dargestellt, wobei 2 die Glasscheiben des Isolierglaselements 1, 4 den Abstandhalterrahmen, 5 die freigebliebene Randfuge und 6 die Versiegelungsdüse bezeichnet.

In den Fällen, wo die Einbringung des Versiegelungsmaterials in die Randfuge aus produktionstechnischen Gründen aber unterbrochen werden muss, beispielsweise weil begrenzte Bewegungsbereiche von Versiegelungsdüse und/oder Isolierglaselement ein Umsetzen erfordern, weil elektrische oder pneumatische Leitungen oder mechanische Verbindungen (z.B. zu im Inneren des Isolierglaselements eingebauten Jalousien) durch die Versiegelungsmassenraupe geführt werden müssen, oder weil die Nachführung des Versiegelungsmaterials stockt (z.B. weil ein Vorratsbehälter für das Versiegelungsmaterial gewechselt wird), und nach der Unterbrechung wieder aufgenommen wird, ergibt/ergeben sich eine oder mehrere weitere Stoßverbindungen entlang dem Umfangsrand des Isolierglaselements.

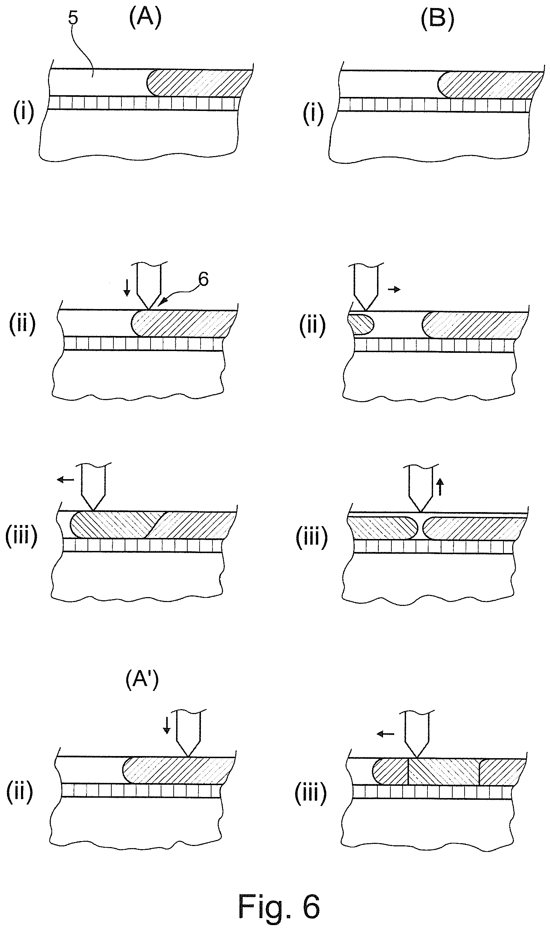

Man kann grundsätzlich zwei Arten von Stoßverbindungen unterscheiden, die in Fig. 6 verdeutlicht sind. Zum einen eine Stoßverbindung, bei der die Zufuhr der Versiegelungsmasse und die Relativbewegung an einer bestimmten Stelle unterbrochen und die Einbringung der Versiegelungsmasse nahe dieser Stelle am balligen Ende der zuvor in die Randfuge eingebrachten Materialraupe wieder angesetzt und in derselben Richtung wie zuvor fortgesetzt wird, so dass das Ende der liegenden Raupe von der Front des neu eingebrachten Materials verformt wird und sich eine Stoßstelle aus zwei Materialsträngen bildet (Stoßverbindung Typ A). Die Stoßverbindung vom Typ A kann gemäß der Darstellung der Variante A' dahingehend etwas modifiziert werden, dass die Düse etwas von dem balligen Ende der liegenden Raupe zurückversetzt angeordnet wird. Das neu ausgestossene Material dringt vor dem Ende der liegenden Raupe in das Material ein und "schiebt" quasi einen kleinen Endabschnitt der zuvor abgelegten Raupe mit der Vorschubbewegung der Düse vor sich her (siehe Fig. A', (iii)). Für beide Varianten, d.h. für Typ A und Typ A' Stoßverbindung wird im Rahmen der Offenbarung der Erfindung die Formulierung gewählt, dass der Strang der Versiegelungsmasse "im Bereich des Endes" der zuvor in die Randfuge eingebrachten Materialraupe angesetzt wird.

Ein alternativer Typ Stoßverbindung wird gebildet, indem die Versiegelungsmasse in einer Richtung zum Ende einer in der Randfuge liegenden Materialraupe hin eingebracht wird und sowohl die Zufuhr des Versiegelungsmaterials als auch die Relativbewegung an dieser Stelle unterbrochen wird (Stoßverbindung Typ B). Die Figur 6 verdeutlicht die Bildung der Stoßverbindung für diese beiden grundsätzlichen Typen und die Varianten vom Typ A/A' in stark schematischer Weise.

Ein Problem bei allen Stoßverbindungen ist generell die Möglichkeit des Einschlusses von Luft in die Versiegelungsmasse und eine unzureichende Vermengung des Materials.

Bei Stoßverbindungen des Typs A können die aufeinandertreffenden Enden eines Versiegelungsmassenstrangs und einer Versiegelungsmassenraupe in der Randfuge in der Regel ohne derartige Probleme verbunden werden, unabhängig davon, wo sich die Stoßstelle am Umfang eines Isolierglaselements befindet. Gemäß der Darstellung in der Figur 6 (A) kann nämlich die Versiegelungsdüse an die Front bzw. das Vorderende einer bereits abgelegten Raupe so herangeführt werden, dass die Front bzw. das Ende der neu abzulegenden Raupe mit der Front der der bereits zuvor abgelegten Raupe vereint und das Material an der Stoßstelle vom nachrückenden Material so verformt wird, dass die Randfuge vollständig und ohne Lufteinschlüsse mit Versiegelungsmasse gefüllt wird.

Während dieses Problem für den Fall einer im Bereich einer Ecke des zu versiegelnden Isolierglaselementes befindlichen Stoßverbindung vom Typ B durch bekannte Verfahren auch weitgehend gelöst ist, die das vollständige Verbinden der zusammentreffenden Enden des Stranges der Versiegelungsmasse an der Stoßstelle ermöglichen, ohne dass im Bereich der Stoßstelle im Inneren der Versiegelungsmasse Lufteinschlusse verbleiben (siehe beispielsweise die in der österreichischen Patentanmeldung A892/2012 beschriebene Spachtelkonstruktion), ist für den Fall einer nicht im Bereich einer Ecke (wenn sich die Stoßstelle also an einem Randfugenabschnitt zwischen zwei Ecken befindet, wobei ein Randfugenabschnitt bei Sonderformen nicht notwendig immer gerade ausgebildet sein muss sondern auch eine gewisse Krümmung besitzen kann) befindlichen Stoßverbindung vom Typ B noch kein Verfahren bekannt, mit dem die vollständige Verbindung von zusammentreffenden Enden der Versiegelungsmassenstränge ohne Lufteinschlüsse in diesem Bereich möglich ist. Gemäß der Darstellung in der Figur 6 (B) sind nämlich die Fronten bzw. vorderen Enden der Raupen aus Versiegelungsmasse ballig, so dass beim Heranführen der Front einer Raupe an die Front einer bereits abgelegten Raupe zur Bildung einer Stoßverbindung vom Typ B die Scheitelpunkte der Raupen aufeinandertreffen. Führt man die Versiegelungsdüse über das Zusammentreffen hinaus noch ein wenig weiter und stößt dabei weiter Material aus, verpresst sich die Stoßstelle zwar, allerdings so, dass zwischen Abstandhalter und Versiegelungsmasse Luft eingeschlossen wird.

Unterbrechungen der Versiegelungsmaterialeinbringung und damit Stoßverbindungen können sich insbesondere aber auch dann ergeben, wenn sehr großformatige Isolierglaselemente in einer Vorrichtung versiegelt werden sollen, bei der der Bewegungsbereich der Versiegelungsdüse in einer Richtung kleiner ist als die Längenabmessung des Isolierglaselements, so dass die gesamte Länge der Randfuge an der entsprechenden Seite des Isolierglaselements nicht unterbrechungsfrei gefüllt werden kann, zumindest wenn das Isolierglaselement selbst still steht. In diesem Fall muss das zu versiegelnde Isolierglaselement nach Unterbrechung und ggf. Rückführung der Versiegelungsdüse ein oder mehrmals nachgesetzt werden, also um ein entsprechendes Maß weiterbefördert werden, damit die Versiegelungsdüse die gesamte Länge der Randfuge an dieser Seite überstreichen kann.

Die im Bereich von Stoßstellen im Inneren der Versiegelungsmasse verbleibenden Lufteinschlüsse erweisen sich in der Praxis als nachteilig, weil sie die mechanische Stabilität der ausgehärteten Versiegelungsmasse und die mechanische Stabilität des fertigen Isolierglaselements herabsetzen. Außerdem erhöhen Lufteinschlüsse im Inneren der Versiegelungsmasse die Wasserdampfpermeabilität der Versiegelungsmasse und erleichtern so die Diffusion von Wasserdampf in den Scheibenzwischenraum. Schließlich sind diese Lufteinschlüsse im Inneren der Versiegelungsmasse nachteilig, weil es in den durch die Lufteinschlüsse gebildeten Kavernen zur Kondensation von Wasserdampf kommen kann, was die Degradation des Versiegelungsmaterials fördert und im Laufe der Zeit zu Undichtigkeiten und Materialbruch führen kann.

Aus der DE 2846785 C2 ist eine Vorrichtung zum automatischen Füllen der Randfuge von Zwei- oder Mehrfach-Isolierglasscheiben mit einer Versiegelungsmasse bekannt, die eine Schwenkeinrichtung aufweist, mittels der die Isolierglasscheibe während des Einbringens der Versiegelungsmasse als separate Stränge mindestens einmal um 90° über ihre in Transportrichtung hintere Ecke verschwenkt wird, nachdem eine erste und eine zweite Fülldüse zunächst an den in Transportrichtung vorderen und hinteren vertikalen Randfugen bei stillstehender Isolierglasscheibe jeweils von unten nach oben entlang gefahren sind, und eine dritte Fülldüse während des Transports der Isolierglasscheibe am oberen Abschnitt der Randfuge entlang bewegt wurde. Nach dem Verschwenken wird eine der Fülldüsen an das obere Ende der jetzt vorderen vertikalen Randfuge zugestellt oder die Isolierglasscheibe wird dorthin verfahren, worauf die verbliebene Randfuge durch eine Bewegung der Fülldüse von oben nach unten gefüllt wird. Durch Anwendung dieser Vorrichtung liegen alle Stoßverbindungen von Versiegelungsmasseraupen ausschließlich an den Ecken der Isolierglasscheibe, so dass in dieser Hinsicht kein Problem mit Lufteinschlüssen zu erwarten ist. Allerdings ist die Schwenkeinrichtung apparatetechnisch sehr aufwändig zu realisieren und bei größeren oder sehr langen Isolierglasscheiben nur eingeschränkt oder gar nicht anwendbar.

Aus der DE 69629929 T2 ist ein Verfahren und eine Vorrichtung zum Auftragen einer Versiegelungsmasse auf Isolierglasscheiben bekannt, bei dem bei einer auf einer Transporteinrichtung still stehenden Isolierglasscheibe zunächst eine erste Fülldüse an einem vorderen Fugenabschnitt von unten nach oben entlang gefahren wird. Dann werden die erste Fülldüse an dem oberen Fugenabschnitt und eine zweite Fülldüse an dem unteren Fugenabschnitt unter gleichzeitigem Transport der Isolierglasscheibe mittels der Transporteinrichtung entlang bewegt, um die Fugenabschnitte zu füllen. Schließlich wird, dann wieder bei stillstehender Isolierglasscheibe die erste Fülldüse am hinteren Fugenabschnitt von oben nach unten entlang gefahren, um den verbleibenden Fugenabschnitt zu füllen. Auch die Anwendung dieses Verfahrens bzw. dieser Vorrichtung führt dazu, dass alle Stoßverbindungen von Versiegelungsmasseraupen ausschließlich an den Ecken der Isolierglasscheibe liegen.

Aus der DE 4009441 A1 ist schließlich eine Vorrichtung zum Füllen einer Randfuge einer Isolierglasscheibe mit Verssiegelungsmasse bekannt, die um eine zur Isolierglasschiebe normale Achse drehbar an einem Schlitten gelagert ist, der wiederum parallel zur Ebene der Isolierglasscheibe entlang zueinander senkrechter Führungen verfahrbar ist. Diese Vorrichtung besitzt einen in der Bewegungsrichtung vorauslaufend angeordneten Tastfinger zur Erfassung der Tiefe der Randfuge.

Aus der DE 2309295 A1 ist ein Verfahren zum Füllen einer Randfuge eines Isolierglaselements mit einer Versiegelungsmasse bekannt, bei der sowohl der Start der Einbringung der Versiegelungsmasse als auch das Ende der Einbringung jeweils an einer Längsseite liegen. Die Einbringung der Versiegelungsmasse erfolgt gleichzeitig durch zwei in entgegengesetzte Umlaufrichtungen um den Umfang des Isolierglaselements bewegte Düsen, so dass sich am Startpunkt eine Verbindung vom "Typ A" und am Endpunkt eine Verbindung vom "Typ B" ergibt. Das Isolierglaselement ist auf einem horizontalen Tisch angeordnet und die Versiegelungsmassenraupe wird ohne Nachsetzen des Isolierglaselements umlaufend eingebracht.

Die EP 1650176 A1 beschreibt eine Vorrichtung und ein Verfahren zum Befüllen einer Randfuge eines Isolierglaselements mit einer Versiegelungsmasse, wobei ein Mehrachsenrobotor, welcher eine Versiegelungsdüse trägt, an einer Längsseite mit der Einbringung der Versiegelungsmasse beginnt und eine umlaufende Bewegung ausführt, bis er wieder an dem Ausgangspunkt an der Längsseite ankommt. Auch hier ist das Isolierglaselement auf einem horizontalen Tisch angeordnet und die Versiegelungsmassenraupe wird ohne Nachsetzen des Isolierglaselements umlaufend eingebracht.

Die DE 4136653 A1 beschreibt eine Vorrichtung zum Füllen einer Randfuge eines Isolierglaselements mit einer Versiegelungsmasse, die, bezogen auf die Versiegelungsrichtung, am hinteren Ende eines Trägers einen Messfühler aufweist, mit dem, über ein optisches Messverfahren, die Oberfläche der Dichtmasse in der Randfuge abgetastet wird

Der Erfindung liegt die Aufgabe zugrunde, die Nachteile von Lufteinschlüssen in Versiegelungsmassenraupen bei Isolierglaselementen zu beseitigen, die aus Stoßverbindungen des Versiegelungsmaterials resultieren, wenn solche Stoßverbindungen insbesondere bei der Herstellung großformatiger Isolierglaselemente nicht zu vermeiden sind.

Diese Aufgabe ist erfindungsgemäß durch ein Verfahren zum Füllen einer Randfuge eines Isolierglaselements mit einer Versiegelungsmasse mit den im Patentanspruch 1 angegebenen Merkmalen gelöst.

Gemäß einem weiteren Aspekt der Erfindung wird auch eine Vorrichtung zum Füllen einer Randfuge eines Isolierglaselements mit einer Versiegelungsmasse gemäß Anspruch 7 und eine Steuereinrichtung für eine Vorrichtung zum Füllen einer Randfuge eines Isolierglaselements mit einer Versiegelungsmasse gemäß Anspruch 13 bereitgestellt.

Vorteilhafte Ausführungsformen und Weiterbildungen des erfindungsgemäßen Verfahrens und der Vorrichtung sind Gegenstand der abhängigen Patentansprüche.

Die Erfindung bringt demnach ein Verfahren zum Füllen einer Randfuge eines Isolierglaselements mit einer Versiegelungsmasse in Vorschlag, bei dem die Versiegelungsmasse als Strang aus mindestens einer Düse in die Randfuge ausgestoßen wird und dort eine zusammenhängende und sich um den Umfang des Isolierglaselements erstreckende Versiegelungsmassenraupe bildet, indem das Isolierglaselement und die mindestens Düse relativ zueinander bewegt werden. Die Versiegelungsmassenraupe wird diskontinuierlich aus mehreren Segmenten gebildet, von denen mindestens ein erstes Segment durch die Relativbewegung in einer ersten Umfangsrichtung des Isolierglaselements und mindestens ein zweites Segment durch die Relativbewegung in einer zweiten Umfangsrichtung, die der ersten Umfangsrichtung entgegengesetzt ist, gebildet wird.

Mit dem erfindungsgemäßen Verfahren ist es insbesondere möglich, großformatige Isolierglaselemente mit Vorrichtungen herzustellen, bei denen aufgrund eines nicht ausreichend großen Bewegungsbereichs, beispielsweise der Führung der Versiegelungsdüse, die Randfuge nicht in einem kontinuierlichen Vorgang mit dem Versiegelungsmaterial gefüllt werden kann, sondern eine Unterbrechung dieses Vorgangs zum Zwecke des Nachsetzens des Isolierglaselements erforderlich ist. Indem nämlich die Versiegelungsmassenraupe diskontinuierlich aus drei oder mehr Segmenten zusammengesetzt wird, besteht zum einen die Möglichkeit des Umsetzens des Isolierglaselements und/oder der Versiegelungsdüse, und zum anderen gibt es mindestens 3 Stoßverbindungen. Während eine dieser Stoßverbindungen (typischerweise die zum Abschluss des Versiegelungsvorgangs) zwangsläufig eine solche vom Typ B gemäß der oben gegebenen detaillierten Erläuterungen ist, kann diese regelmäßig ohne Schwierigkeiten in den Bereich einer Ecke des Isolierglaselementes gelegt werden, so dass Lufteinschlüsse durch herkömmliche Techniken verhindert werden können oder nicht auftreten. Andererseits sind mindestens zwei weitere Stoßverbindung erfindungsgemäß solche vom Typ A oder A', so dass auch hier das Problem der Lufteinschlüsse an der Stoßverbindung nicht auftritt, selbst wenn diese Stoßverbindung an einer Längsseite des Isolierglaselements zwischen Ecken ausgeführt wird.

Anders ausgedrückt liegt ein wesentlicher Gesichtspunkt der Erfindung darin, dass nicht in den Eckbereichen des Isolierglaselements befindliche Stoßverbindungen der Versiegelungsmassenraupe in der Randfuge ausschließlich als Stoßverbindungen vom Typ A oder A' ausgeführt werden.

Erfindungsgemäß wird jede Verbindung an Enden von Segmenten der Versiegelungsmassenraupe, die sich an einem Längsseitenabschnitt (also nicht an einem Eckbereich zweier angrenzender Längsseitenabschnitte) des Umfangs des Isolierglaselements befindet, dadurch gebildet, dass der Strang der Versiegelungsmasse an dem Ende einer bereits in der Randfuge befindlichen Versiegelungsmassenraupe angesetzt und durch die Relativbewegung von diesem Ende weg gebildet wird.

Erfindungsgemäß befindet sich jede Verbindung an Enden von Segmenten der Versiegelungsmassenraupe, die dadurch gebildet wird, dass der Strang der Versiegelungsmasse durch die Relativbewegung zu dem Ende einer bereits in der Randfuge befindlichen Versiegelungsmassenraupe hin eingebracht wird (Stoßverbindung vom Typ B), an einem Eckbereich zweier angrenzender Längsseitenabschnitte des Isolierglaselements.

Demnach sind erfindungsgemäß über die zwangsläufige Stoßverbindung vom Typ B, die in den Eckbereich gelegt wird, hinausgehenden weiteren Stoßverbindungen erfindungsgemäß entweder als Stoßstellen vom Typ A oder A' ausgeführt oder sie werden so positioniert, dass sie in den Eckenbereichen des Isolierglaselementes liegen. Die zusätzlichen Stoßverbindungen der Versiegelungsmassenraupe, die durch das Nachsetzen des Isolierglaselementes erforderlich werden, sind also vom Typ A oder A' und liegen grundsätzlich nicht in den Eckbereichen des Isolierglaselements. Auch wenn Stoßverbindungen in Folge einer Unterbrechung der Versiegelungsmaterialeinbringung erforderlich sind, können diese vom Typ A oder A' und an einer geraden bzw. gekrümmten Längsseite des Isolierglaselements zwischen Ecken ausgebildet sein.

Anders als bei den bekannten Verfahren zum Füllen einer Randfuge eines Isolierglaselements mit einer Versiegelungsmasse, bei denen die Versiegelungsmassenraupe in einem kontinuierlichen Vorgang während einer relativen Bewegung zwischen der Versiegelungsdüse und dem Isolierglaselement in nur einer Umfangsrichtung des Isolierglaselements ausgeführt wird, sieht das erfindungsgemäße Verfahren zumindest eine Unterbrechung des Einbringungsvorgangs und eine Fortsetzung der Einbringung in einer entgegengesetzten Umfangsrichtung vor, wodurch die Möglichkeit des Umsetzens der Versiegelungsdüse und/oder des Isolierglaselements gegeben ist und insbesondere großformatige Isolierglaselemente auch auf Versiegelungsvorrichtungen mit kleineren Abmessungen und Bewegungsbereichen bearbeitet werden können.

Dieser Vorteil wird auch dadurch unterstützt, dass vorzugsweise das Isolierglaselement während des Füllens der Randfuge mit den Segmenten der Versiegelungsmassenraupe jeweils stationär gehalten wird und die Düse bewegt wird, und das Isolierglaselement zwischen dem Füllen der Randfuge mit den Segmenten mindestens einmal in seiner Position, vorzugsweise in einer Transportrichtung des Isolierglaselements, nachgesetzt wird.

Bei dem erfindungsgemäßen Verfahren wird der Anfangspunkt des ersten Segments der Versiegelungsmassenraupe vorzugsweise an einen Längsseitenabschnitt des Umfangs des Isolierglaselements gelegt, und das zweite Segment wird ebenfalls an dem Anfangspunkt des ersten Segments begonnen.

Das erfindungsgemäße Verfahren kann insbesondere zur Versiegelung besonders großformatiger Isolierglaselemente verwendet werden, wobei ein mehrfaches Nachsetzen bzw. Umsetzen der Isolierglaselemente und der Versiegelungsdüse erforderlich ist, indem die Versiegelungsmassenraupe aus N ersten Segmenten und (N-1) zweiten Segmenten gebildet wird, wobei N ganzzahlig und >2 ist.

Vorzugsweise wird bei dem erfindungsgemäßen Verfahren das Isolierglaselement beim Füllen der Randfuge mit der Versiegelungsmasse im Wesentlichen vertikal gelagert, und das Umsetzen des Isolierglaselements wird als translatorische Bewegung ausgeführt. Dadurch wird erheblich weniger Raum für die Vorrichtung benötigt als beispielsweise bei manuellen Verfahren, die eine horizontale Lagerung des Isolierglaselements und eine Drehung in der Ebene des Isolierglaselements vorsehen.

Während das erfindungsgemäße Verfahren mit einer Vorrichtung ausgeführt werden kann, die nur eine einzelne bewegbare Versiegelungsdüse besitzt, so dass diese mehrfach umgesetzt werden muss, kann das Verfahren auch mit einer Vorrichtung realisiert werden, bei der für jedes Segment (oder für eine Anzahl von Segmenten) eine eigene Versiegelungsdüse vorgesehen ist. In diesem Fall kann die Anzahl der Umsetzvorgänge geringer und die Bearbeitungszeit verkürzt sein.

Um den bei dem erfindungsgemäßen Verfahren zumindest dann notwendig vorhanden Wechsel der Umlaufbewegung der Versiegelungsdüse, wenn nur eine solche oder jedenfalls weniger Versiegelungsdüsen als Segmente vorhanden sind, sehr effektiv und mit geringem apparatetechnischen Aufwand zu ermöglichen, sieht die Erfindung auch eine Vorrichtung zum Füllen einer Randfuge eines Isolierglaselements mit einer Versiegelungsmasse vor, die eine Düse mit einer Auslassöffnung zum Ausstoßen eines Strangs der Versiegelungsmasse in die Randfuge des Isolierglaselements bei einer Relativbewegung zwischen Düse und Isolierglaselement, und ein der Auslassöffnung zugeordnetes Führungselement, das dazu ausgestaltet ist, um im Einsatz an einem Rand des Isolierglaselements geführt zu werden und ein seitliches Entweichen von in die Randfuge eingebrachter Versiegelungsmasse zu verhindern, aufweist, wobei die Auslassöffnung der Düse und das Führungselement so ausgestaltet sind, dass der Strang in entgegengesetzten relativen Bewegungsrichtungen in die Randfuge eingebracht werden kann.

Vorzugsweise sind dazu die Auslassöffnung und das Führungselement symmetrisch so aufgebaut und angeordnet, dass der Strang entsprechend den entgegengesetzten relativen Bewegungsrichtungen ausgestoßen und in die Randfuge eingebracht werden kann. In diesem Fall muss zum Einbringen der Segmente in den unterschiedlichen Richtungen lediglich die Umlaufrichtung gewechselt werden.

Vorzugsweise ist das Führungselement mit schaufel- oder kufenartig abgeschrägten oder abgerundeten Endabschnitten an beiden entgegengesetzten Enden in der Bewegungsrichtung ausgebildet. Diese Variante ist besonders einfach realisierbar, indem nämlich existierende Führungselemente einen solchen ski-, schaufel- oder kufenartig abgeschrägten oder abgerundeten Endabschnitt oder Bug bereits an einem Ende besitzen, und ein solcher nur noch an dem gegenüberliegenden Endabschnitt ausgebildet werden muss. Damit kann eine existierende Versiegelungsvorrichtung besonders einfach für die Ausführung des erfindungsgemäßen Verfahrens hergerichtet werden.

Alternativ ist es vorzugsweise auch möglich, die Auslassöffnung und das Führungselement zwischen zwei Arbeitspositionen entsprechend den entgegengesetzten relativen Bewegungsrichtungen verstellbar, vorzugsweise verschwenkbar auszugestalten. In diesem Fall muss das Führungselement selbst nicht notwendig modifiziert werden sondern lediglich die Halterung desselben.

Für automatisierte Versiegelungsvorrichtungen ist erfindungsgemäß eine Sensoranordnung zum Bestimmen der Randfugentiefe, vorzugsweise in Bewegungsrichtung unmittelbar vor dem ski-, schaufel- oder kufenartigen Bug des Führungselements vorgesehen. Durch Auswertung des erfassten Tiefensignals kann die Förder- und Strömungsmenge an Versiegelungsmasse und/oder die Relativgeschwindigkeit zwischen Versiegelungsdüse und zu versiegelndem Isolierglaselement mit dem Ziel gesteuert oder geregelt werden, dass die Randfuge vollständig mit Versiegelungsmasse gefüllt wird, ohne dass überschüssige Versiegelungsmasse heraustritt. Um den erfindungsgemäßen Wechsel der Einbringungsrichtung der Versiegelungsmasse auch bei solchen Vorrichtungen zu ermöglichen, besitzt die Sensoranordnung vorzugsweise entweder einen Sensor für jede der beiden entgegengesetzten relativen Bewegungsrichtungen, oder sie besitzt einen Sensor, der zwischen zwei Arbeitspositionen entsprechend den entgegengesetzten relativen Bewegungsrichtungen verstellt, vorzugsweise verschwenkt werden kann.

Ein solcher Sensor ist sodann vorzugsweise durch einen beweglich gelagerten Tastfühler gebildet, dessen Auslenkung als Maß für die Randfugentiefe erfassbar ist.

Schließlich betrifft die Erfindung auch eine Steuereinrichtung für eine Vorrichtung zum Füllen einer Randfuge eines Isolierglaselements mit einer Versiegelungsmasse, wobei die Vorrichtung eine Transporteinrichtung zum Transportieren des Isolierglaselements in einer Transportrichtung und eine bewegbar ausgestaltete Einrichtung zum Ausstoßen eines Strangs der Versiegelungsmasse in die Randfuge des Isolierglaselements umfasst. Die Steuereinrichtung ist erfindungsgemäß so eingerichtet, dass sie Antriebsmittel der Transporteinrichtung und der Einrichtung zum Ausstoßen eines Strangs der Versiegelungsmasse so ansteuern kann, dass die Randfuge des Isolierglaselements mit der Versiegelungsmasse gemäß dem zuvor erläuterten erfindungsgemäßen Verfahren gefüllt wird.

Das erfindungsgemäße Verfahren und die Steuervorrichtung sind wie beschrieben besonders vorteilhaft zur Herstellung großformatiger Isolierglaselemente mit großen Abmessungen bei Vorrichtungen geeignet, wenn diese die Möglichkeit haben, ein Isolierglaselement ein- oder mehrmals um- bzw. nachzusetzten und die Versiegelung so erfolgt, dass das Isolierglaselement während des Einbringens der Versiegelungsmasse stillsteht und dabei nur die Versiegelungsdüse bewegt wird. Weil die großen Isolierglaselemente eine sehr hohe Masse haben, ist es oft schwierig, die Isolierglaselemente akkurat und schnell zu positionieren, während die Bewegung und Führung der leichteren Versiegelungsdüse(n) vergleichsweise einfach, schnell und genau möglich ist. Dadurch ergibt sich ferner die Möglichkeit, dass eine selbst für die Versiegelung großer Isolierglaselemente konzipierte Anlage auch mit einer Baugröße realisiert werden kann, bei der unter Anwendung des herkömmlichen Versiegelungsverfahrens Isolierglaselemente dieser Größe nicht bearbeitet werden könnten.

Das Verfahren gemäß der vorliegenden Erfindung wird nachfolgend anhand von in den beigefügten Zeichnungen dargestellten Ausführungsbeispielen erläutert.
Fig. 1 zeigt ganz allgemein die Ausbildung einer Versiegelungsmassenraupe an einem Isolierglaselement in einem kontinuierlichen Ablauf.
Fig. 2 zeigt ein Beispiel des erfindungsgemäßen Verfahrens, bei dem ein einmaliges Umsetzen des Isolierglaselements ausgeführt wird.
Fig. 3 zeigt ein Beispiel des erfindungsgemäßen Verfahrens, bei dem ein mehrmaliges Umsetzen des Isolierglaselements ausgeführt wird.
Fig. 4 zeigt einen Vergleich der Ausbildung einer Stoßverbindung vom Typ B an einem geraden Umfangsabschnitt mit einer Führungseinrichtung nach dem Stand der Technik und der Ausbildung einer Stoßverbindung vom Typ A an einem geraden Umfangsabschnitt mit einer erfindungsgemäßen Führungseinrichtung.
Fig. 5 zeigt eine erfindungsgemäße Vorrichtung mit symmetrischer Versiegelungsdüse und mit entsprechend der jeweiligen Bewegungsrichtung umstellbaren Abtastfingern.
Fig. 6 zeigt die Ausbildung von unterschiedlichen Stoßverbindungen einer Versiegelungsmassenraupe nach dem Typ A, A' und nach dem Typ B.

Bei dem in Figur 2 schematisch gezeigten Beispiel des erfindungsgemäßen Verfahrens wird die Versiegelungsmasse in drei Segmenten in die Randfuge eingebracht, indem das Isolierglaselement einmal umgesetzt wird. Zuerst wird der Abschnitt 7 der Randfuge beginnend bei Position 7' mit Versiegelungsmasse gefüllt, indem bei still stehendem Isolierglaselement die Versiegelungsdüse in der Gegenuhrzeigerrichtung um den Umfang des Isolierglaselements bewegt wird (Fig. 2a). Das Füllen des Abschnitts 7 wird bei Position 7" beendet, so dass das erste Segment der Versiegelungsmassenraupe in die Randfuge eingebracht ist. Das Isolierglaselement wird um die Länge 8 in der Durchlaufrichtung nachgesetzt. Der noch nicht mit Versiegelungsmasse gefüllte Rest der Randfuge wird in zwei Teilabschnitte unterteilt, die nacheinander mit Versiegelungsmasse gefüllt werden.

Zuerst wird der Abschnitt 10 mit Versiegelungsmasse gefüllt, weil dadurch der Umsetzweg der Düse kürzer ist als für den Abschnitt 9. Das Füllen des Abschnitts 10 beginnt bei Position 10', nachdem die Versiegelungsdüse von der Endposition bei 7" zu der Anfangsposition bei 10' umgesetzt wurde, und endet bei Position 10". Damit ist das zweite Segment der Versiegelungsmassenraupe in die Randfuge eingebracht. Nach erneutem Umsetzen der Versiegelungsdüse von der Endposition bei 10" zu der Anfangsposition bei 9' wird der dritte Abschnitt 9 mit Versiegelungsmasse gefüllt. Das Füllen des dritten Abschnitts 9 beginnt bei Position 9' und endet bei Position 9", indem die Versiegelungsdüse in der Uhrzeigerrichtung um den Umfang des Isolierglaselements bewegt wird (Fig. 2b). Der Umlauf der Versiegelungsdüse während der Versiegelung der Abschnitte 7 und 10 läuft in der gezeigten Darstellung dem Uhrzeigersinn entgegen, während der Umlauf der Versiegelungsdüse während der Versiegelung des Abschnitts 9 in der gezeigten Darstellung dem Uhrzeigersinn folgt. Das Umsetzen der Versiegelungsdüse kann dann und soweit entfallen, als mehrere Versiegelungsdüsen vorgesehen sind. Auch die Reihenfolge der Versiegelung der Abschnitte 9 und 10 kann vertauscht werden.

Stoßverbindungen ergeben sich an den Positionen 7"/10', 9"/10" und 7'/9'. Diese liegen entweder im Bereich eines Ecks des Isolierglaselements 1 (Stoßverbindung an der Position 9"/10") oder es handelt sich um Stoßverbindungen vom Typ A oder A' (Stoßverbindung an der Position 7"/10' und 7'/9'). Deshalb kann die Bildung von Lufteinschlüssen an allen Stoßverbindungen vermieden werden.

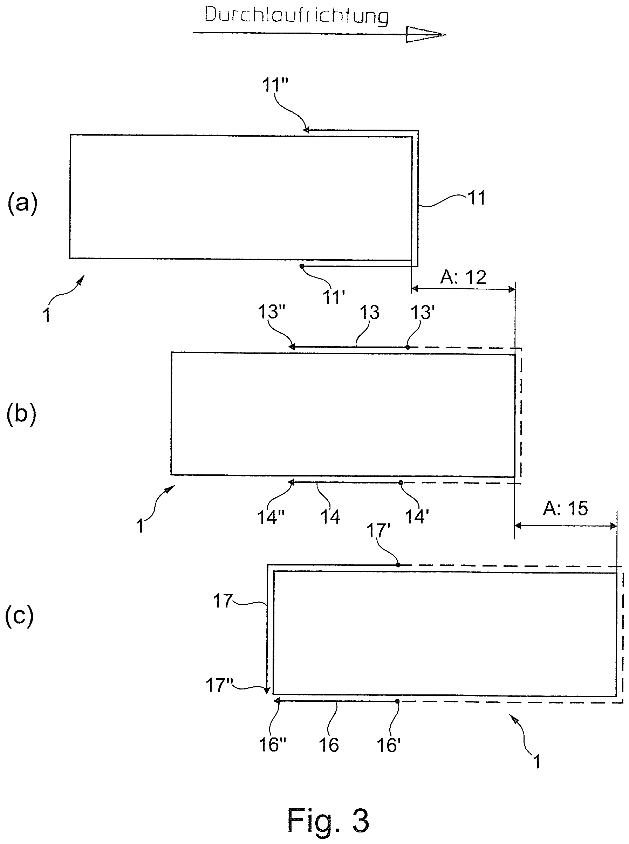

Bei dem in Figur 3 schematisch gezeigten weiteren Beispiel des erfindungsgemäßen Verfahrens wird ein zweimaliges Umsetzen des Isolierglaselements ausgeführt. Bei dem in Figur 3 gezeigten Beispiel wird die Versiegelungsmasse in fünf Segmenten in die Randfuge eingebracht, indem das Isolierglaselement dreimal umgesetzt wird. Zuerst wird der Abschnitt 11 der Randfuge beginnend bei Position 11' mit Versiegelungsmasse gefüllt, indem bei still stehendem Isolierglaselement 1 die Versiegelungsdüse in der Gegenuhrzeigerrichtung um den Umfang des Isolierglaselements bewegt wird (Fig. 3a). Das Füllen des Abschnitts 11 wird bei Position 11" beendet, so dass das erste Segment der Versiegelungsmassenraupe in die Randfuge eingebracht ist.

Das Isolierglaselement wird um die Länge 12 in der Durchlaufrichtung nachgesetzt. Der noch nicht mit Versiegelungsmasse gefüllte Rest der Randfuge wird in vier Teilabschnitte unterteilt, die nacheinander mit Versiegelungsmasse gefüllt werden. Zuerst wird der Abschnitt 13 mit Versiegelungsmasse gefüllt, nachdem die Versiegelungsdüse von der Endposition bei 11" zu der Anfangsposition bei 13' umgesetzt wurde. Das Füllen des zweiten Abschnitts 13 beginnt bei Position 13' und endet bei Position 13", indem die Versiegelungsdüse in der Gegenuhrzeigerrichtung um den Umfang des Isolierglaselements bewegt wird (Fig. 3b). Damit ist das zweite Segment der Versiegelungsmassenraupe in die Randfuge eingebracht. Nach erneutem Umsetzen der Versiegelungsdüse von der Endposition bei 13" zu der Anfangsposition bei 14' wird der dritte Abschnitt 14 mit Versiegelungsmasse gefüllt. Das Füllen des Abschnitts 14 beginnt bei Position 14' und endet bei Position 14". Der Umlauf der Versiegelungsdüse während der Versiegelung des Abschnitts 14 läuft in der gezeigten Darstellung im Uhrzeigersinn. Damit ist das dritte Segment der Versiegelungsmassenraupe in die Randfuge eingebracht.

Das Isolierglaselement wird sodann nochmals um die Länge 15 in der Durchlaufrichtung nachgesetzt. Dann wird der Abschnitt 17 mit Versiegelungsmasse gefüllt, nachdem die Versiegelungsdüse von der Endposition bei 14" zu der Anfangsposition bei 17' umgesetzt wurde. Das Füllen des vierten Abschnitts 17 beginnt bei Position 17' und endet bei Position 17", indem die Versiegelungsdüse in der Gegenuhrzeigerrichtung um den Umfang des Isolierglaselements bewegt wird (Fig. 3c). Damit ist das vierte Segment der Versiegelungsmassenraupe in die Randfuge eingebracht. Nach nochmaligem Umsetzen der Versiegelungsdüse von der Endposition bei 17" zu der Anfangsposition bei 16' wird der fünfte Abschnitt 16 mit Versiegelungsmasse gefüllt. Das Füllen des Abschnitts 16 beginnt bei Position 16' und endet bei Position 16". Der Umlauf der Versiegelungsdüse während der Versiegelung des fünften Abschnitts 16 läuft in der gezeigten Darstellung im Uhrzeigersinn. Damit ist das fünfte und letzte Segment der Versiegelungsmassenraupe in die Randfuge eingebracht. Das Umsetzen der Versiegelungsdüse kann dann und soweit entfallen, als mehrere Versiegelungsdüsen vorgesehen sind. Auch die Reihenfolge der Versiegelung der Abschnitte 13 und 14 sowie 17 und 16 kann vertauscht werden.

Stoßverbindungen ergeben sich an den Positionen 11"/13', 13"/17', 17"/16", 11'/14', 14"/16'. Diese liegen entweder im Bereich eines Ecks des Isolierglaselements 1 (Stoßverbindung an der Position 17"/16") oder es handelt sich um Stoßverbindungen vom Typ A oder A' (Stoßverbindung an den Positionen 11"/13', 13"/17', 11'/14', 14"/16'). Deshalb kann die Bildung von Lufteinschlüssen an allen Stoßverbindungen vermieden werden.

Weitere Alternativen des Versieglungsverfahrens können unter Anwendung der zuvor beschriebenen Prinzipien ohne weiteres ausgeführt werden.

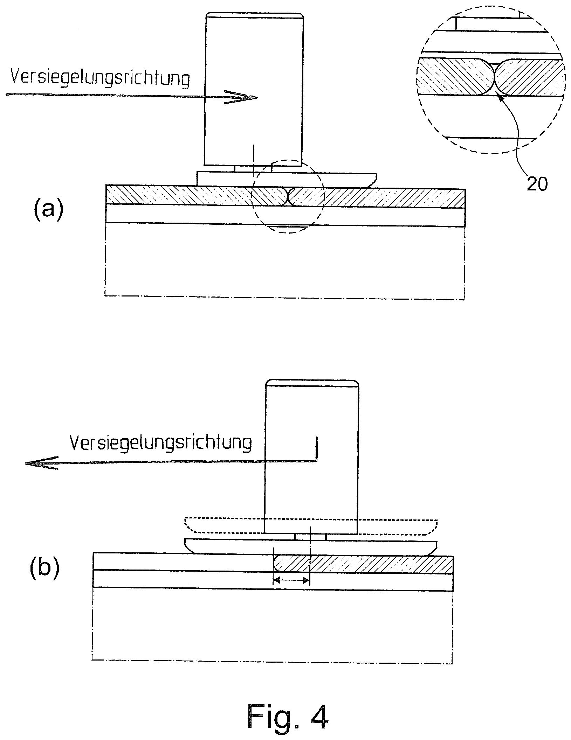

Die Figur 4 zeigt einen Vergleich der Ausbildung einer Stoßverbindung vom Typ B an einem geraden Umfangsabschnitt mit einer Führungseinrichtung nach dem Stand der Technik(Fig. 4a) und der Ausbildung einer Stoßverbindung vom Typ A oder A' an einem geraden Umfangsabschnitt mit einer erfindungsgemäßen Führungseinrichtung (Fig. 4b). Die in Fig. 4a gezeigte Führungseinrichtung hat nur ein in der Bewegungs- bzw. Versiegelungsrichtung vorne liegenden ski-, schaufel- oder kufenartig abgeschrägten oder abgerundeten Endabschnitt. Das aktuell durch Ausstoßen von Versiegelungsmasse aus der Düse gebildete Segment (das linke in der Darstellung) schließt an dem bereits in der Randfuge befindlichen Segment der Versiegelungsmassenraupe (das rechte in der Darstellung) an, indem sich der Strang auf dieses zu bewegt. Eine solche Stoßverbindung ergibt sich beispielsweise dann, wenn die Versiegelungseinrichtung einen vollständigen Umlauf um den Umfang eines Isolierglaselements in einer Umfangsrichtung ausgeführt hat und wieder auf den Anfang der Raupe trifft. Bei dieser Stoßverbindung ergibt sich wie beschrieben zumindest dann das Risiko der Ausbildung von Lufteinschlüssen innerhalb der Versiegelungsmasse, was in der Detailvergrößerung 1 angedeutet ist, wenn die Stoßverbindung nicht an einem Eckbereich liegt.

Die in Fig. 4b gezeigte Führungseinrichtung gemäß der Erfindung hat, um den Richtungswechsel der Versiegelungsrichtung in einfacher Weise ausführen zu können, die ski-, schaufel- oder kufenartig abgeschrägten oder abgerundeten Endabschnitte an beiden Enden und ist vorzugsweise symmetrisch ausgestaltet. Das stromabwärtige (bezogen auf die Versiegelungsrichtung) Segment der Versiegelungsmassenraupe schließt sich am Endbereich der bereits in der Randfuge befindlichen Raupe an, wobei die Stoßverbindung als solche vom Typ A oder A' ausgebildet sein kann (die Düsenposition für den Typ A' ist in Fig. 4b angedeutet), und führt bei wechselnder Versiegelungsrichtung von diesem weg. Dadurch kann, wie ebenfalls beschrieben wurde, das Risiko der Ausbildung von Lufteinschlüssen 20 (siehe Fig. 4a) innerhalb der Versiegelungsmasse verhindert werden, selbst wenn eine solche Stoßverbindung an einem geraden Längsabschnitt einer Seite und damit nicht in einem Eckbereich des Isolierglaselements liegt.

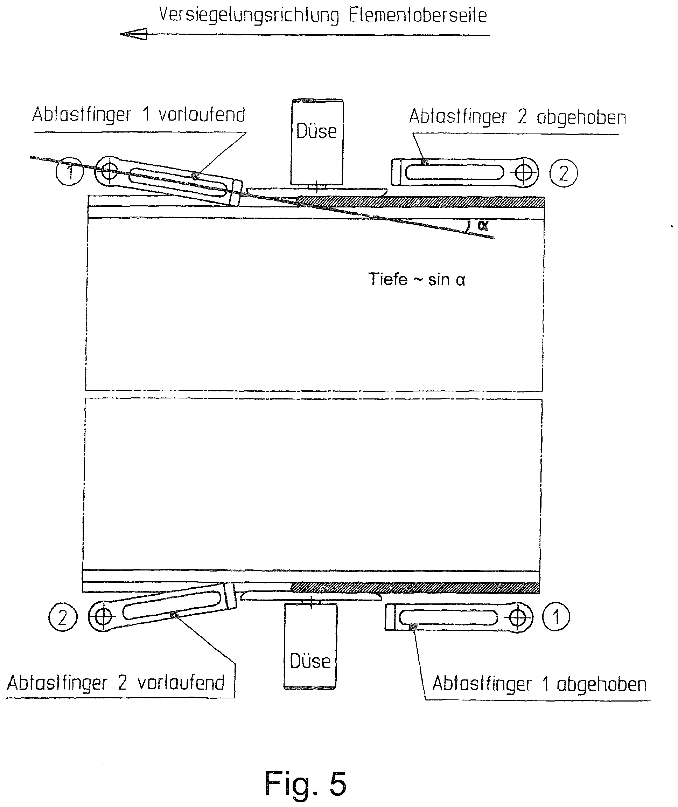

Die Figur 5 zeigt schließlich eine erfindungsgemäße Vorrichtung mit symmetrischer Versiegelungsdüse wie in Figur 4 und mit entsprechend der jeweiligen Bewegungsrichtung durch Drehung bzw. Verschwenken um eine Drehachse in eine Arbeitsposition umstellbaren symmetrisch angeordneten Abtastfingern. Die Drehachse des Tiefensensors kann in definiertem Abstand zum Rand des zu versiegelnden Isolierglaselements an einem (nicht dargestellten) Rahmen der Versiegelungseinrichtung geführt sein, so dass das Ende des Abtastfingers in der Arbeitsposition über die nach Außen weisende Fläche des Abstandhalters vor der Versiegelungsdüse gleiten kann. Bei bekannter Länge des Abtastfingers und Position der Drehachse kann aus dem Neigungswinkel des Abtastfingers über trigonometrische Funktionen die Tiefe der Randfuge berechnet werden und diese Information kann dann für die Steuerung der Versiegelungsmassenzufuhr und/oder Relativgeschwindigkeit zwischen Versiegelungsdüse und Isolierglaselement verwendet werden.

## Patentansprüche

1. Verfahren zum Füllen einer Randfuge eines Isolierglaselements mit einer Versiegelungsmasse,
wobei die Versiegelungsmasse als Strang aus mindestens einer Düse in die Randfuge ausgestoßen wird und dort eine zusammenhängende und sich um den Umfang des Isolierglaselements erstreckende Versiegelungsmassenraupe bildet, indem das Isolierglaselement und die mindestens eine Düse relativ zueinander bewegt werden,
wobei die Versiegelungsmassenraupe diskontinuierlich aus mehreren Segmenten gebildet wird, von denen mindestens ein erstes Segment durch die Relativbewegung in einer ersten Umfangsrichtung des Isolierglaselements und mindestens ein zweites Segment durch die Relativbewegung in einer zweiten Umfangsrichtung, die der ersten Umfangsrichtung entgegengesetzt ist, gebildet wird,
wobei jede Verbindung von Segmenten der Versiegelungsmassenraupe, die sich an einem Längsseitenabschnitt des Umfangs des Isolierglaselements befindet, dadurch gebildet wird, dass der Strang der Versiegelungsmasse im Bereich des Endes einer bereits in der Randfuge befindlichen Versiegelungsmassenraupe angesetzt und durch die Relativbewegung von diesem Ende weg gebildet wird, und **dadurch gekennzeichnet, dass** jede Verbindung von Segmenten der Versiegelungsmassenraupe, die dadurch gebildet wird, dass der Strang der Versiegelungsmasse durch die Relativbewegung zu dem Ende einer bereits in der Randfuge befindlichen Versiegelungsmassenraupe hin eingebracht wird, sich an einem Eckbereich zweier Längsseitenabschnitte des Isolierglaselements befindet.

2. Das Verfahren gemäß Anspruch 1, wobei das Isolierglaselement während des Füllens der Randfuge mit den Segmenten der Versiegelungsmassenraupe jeweils stationär gehalten wird und die Düse bewegt wird, und wobei das Isolierglaselement zwischen dem Füllen der Randfuge mit den Segmenten mindestens einmal in seiner Position, vorzugsweise in einer Transportrichtung des Isolierglaselements, nachgesetzt wird.

3. Das Verfahren gemäß einem der Ansprüche 1 bis 2, wobei der Anfangspunkt des ersten Segments der Versiegelungsmassenraupe an einem Längsseitenabschnitt des Umfangs des Isolierglaselements liegt, und das zweite Segment ebenfalls im Bereich des Anfangspunkts des ersten Segments beginnt.

4. Das Verfahren gemäß einem der Ansprüche 1 bis 3, wobei die Versiegelungsmassenraupe aus N ersten Segmenten und (N-1) zweiten Segmenten gebildet wird und N ganzzahlig und >2 ist.

5. Das Verfahren gemäß einem der Ansprüche 1 bis 4, wobei die ersten und zweiten Segmente der Versiegelungsmassenraupe durch dieselbe Düse oder jeweils durch eine eigene Düse gebildet werden.

6. Das Verfahren gemäß einem der Ansprüche 1 bis 5, wobei das Isolierglaselement beim Füllen der Randfuge mit der Versiegelungsmasse im Wesentlichen vertikal gelagert ist und das Umsetzen des Isolierglaselements als translatorische Bewegung ausgeführt wird.

7. Vorrichtung zum Füllen einer Randfuge eines Isolierglaselements mit einer Versiegelungsmasse, mit:
einer Düse mit einer Auslassöffnung zum Ausstoßen eines Strangs der Versiegelungsmasse in die Randfuge des Isolierglaselements bei einer Relativbewegung zwischen Düse und Isolierglaselement,
einem der Auslassöffnung zugeordneten Führungselement, das dazu ausgestaltet ist, um im Einsatz an einem Rand des Isolierglaselements geführt zu werden und ein seitliches Entweichen von in die Randfuge eingebrachter Versiegelungsmasse zu verhindern, und einer Sensoranordnung zum Bestimmen der Randfugentiefe, wobei die Auslassöffnung der Düse und das Führungselement so ausgestaltet sind, dass der Strang in entgegengesetzten relativen Bewegungsrichtungen in die Randfuge eingebracht werden kann.

8. Die Vorrichtung gemäß Anspruch 7, wobei die Auslassöffnung und das Führungselement symmetrisch so aufgebaut und angeordnet sind, dass der Strang entsprechend den entgegengesetzten relativen Bewegungsrichtungen ausgestoßen und in die Randfuge eingebracht werden kann.

9. Die Vorrichtung gemäß Anspruch 8, wobei das Führungselement mit schaufelartig abgeschrägten Endabschnitten an beiden entgegengesetzten Enden in der Bewegungsrichtung ausgebildet ist.

10. Die Vorrichtung gemäß Anspruch 7, wobei die Auslassöffnung und das Führungselement zwischen zwei Arbeitspositionen entsprechend den entgegengesetzten relativen Bewegungsrichtungen verstellt, vorzugsweise verschwenkt werden können.

11. Die Vorrichtung gemäß einem der Ansprüche 7 bis 10, wobei die Sensoranordnung entweder einen Sensor für jede der beiden entgegengesetzten relativen Bewegungsrichtungen aufweist, oder einen Sensor aufweist, der zwischen zwei Arbeitspositionen entsprechend den entgegengesetzten relativen Bewegungsrichtungen verstellt, vorzugsweise verschwenkt werden kann.

12. Die Vorrichtung gemäß Anspruch 11, wobei der Sensor durch einen beweglich gelagerten Tastfühler gebildet wird, dessen Auslenkung als Maß für die Randfugentiefe erfassbar ist.

13. Steuereinrichtung für eine Vorrichtung zum Füllen einer Randfuge eines Isolierglaselements mit einer Versiegelungsmasse, wobei die Vorrichtung eine Transporteinrichtung zum Transportieren des Isolierglaselements in einer Transportrichtung und eine bewegbar ausgestaltete Einrichtung zum Ausstoßen eines Strangs der Versiegelungsmasse in die Randfuge des Isolierglaselements umfasst, und
wobei die Steuereinrichtung so eingerichtet ist, dass sie Antriebsmittel der Transporteinrichtung und der Einrichtung zum Ausstoßen eines Strangs der Versiegelungsmasse so ansteuern kann, dass die Randfuge des Isolierglaselements mit der Versiegelungsmasse gemäß dem Verfahren nach einem der Ansprüche 1 bis 6 gefüllt wird.

## Claims

1. A method for filling an edge joint of an insulating glass element with a sealing compound,
wherein the sealing compound is expelled as a bead from at least one nozzle into the edge joint and forms there a contiguous sealing compound bead extending around the circumference of the insulating glass element, in that the insulating glass element and the at least one nozzle are moved relative to each other,
wherein the sealing compound bead is formed discontinuously from several segments, of which at least one first segment is formed by the relative movement in a first circumferential direction of the insulating glass element and at least one second segment by the relative movement in a second circumferential direction which is opposite to the first circumferential direction,
wherein each connection of segments of the sealing compound bead, which is situated on a longitudinal side section of the circumference of the insulating glass element, is formed in such a way that the strand of the sealing compound is applied in the region of the end of a sealing compound bead already situated in the edge joint and is formed by the relative movement away from said end, and
**characterized in that**
each connection of segments of the sealing compound bead, which is formed in such a way that the strand of the sealing compound is introduced by the relative movement towards the end of a sealing compound bead already situated in the edge joint, is situated in a corner region of two longitudinal side sections of the insulating glass element.

2. The method according to claim 1, wherein the insulating glass element is respectively held in a stationary manner during the filling of the edge joint with the segments of the sealing compound bead and the nozzle is moved, and wherein the insulating glass element, between the filling of the edge joint with the segments, is repositioned at least once in its position, preferably in a transport direction of the insulating glass element.

3. The method according to one of the claims 1 to 2, wherein the starting point of the first segment of the sealing compound bead lies on a longitudinal side section of the circumference of the insulating glass element, and the second segment also commences in the region of the starting point of the first segment.

4. The method according to one of the claims 1 to 3, wherein the sealing compound bead is formed from N first segments and (N-1) second segments, and N is an integral number and >2.

5. The method according to one of the claims 1 to 4, wherein the first and second segments of the sealing compound bead are formed by the same nozzle or respectively by a separate nozzle.

6. The method according to one of the claims 1 to 5, wherein the insulating glass element is mounted in a substantially vertical way during the filling of the edge joint with the sealing compound and the repositioning of the insulating glass element is carried out as a translatory movement.

7. An apparatus for filling an edge joint of an insulating glass element with a sealing compound, comprising:
a nozzle with an outlet opening for expelling a strand of the sealing compound into the edge joint of the insulating glass element during a relative movement between the nozzle and the insulating glass element,
a guide element associated with the outlet opening, which is formed in such a way so that it is guided in operation on an edge of the insulating glass element and prevents lateral escape of sealing compound introduced into the edge joint,
and a sensor arrangement for determining the edge joint depth,
wherein the outlet opening of the nozzle and the guide element are formed in such a way that the strand can be introduced into the edge joint in opposite relative directions of movement.

8. The apparatus according to claim 7, wherein the outlet opening and the guide element are symmetrically formed and arranged in such a way that the strand can be expelled according to the opposite relative directions of movement and can be introduced into the edge joint.

9. The apparatus according to claim 8, wherein the guide element is formed with end sections bevelled in the manner of a blade at the two opposite ends in the direction of movement.

10. The apparatus according to claim 7 wherein the outlet opening and the guide element can be adjusted, preferably pivoted, between two working positions according to the opposite relative directions of movement.

11. The apparatus according to one of the claims 7 to 10, wherein the sensor arrangement either comprises a sensor for each of the two opposite relative directions of movements or comprises a sensor which can be adjusted, and preferably pivoted, between two working positions according to the opposite relative directions of movement.

12. The apparatus according to claim 11, wherein the sensor is formed by a movably mounted contact sensor, whose deflection can be detected as a measure for the edge joint depth.

13. A control device for an apparatus for filling an edge joint of an insulating glass element with a sealing compound, wherein the apparatus comprises a transport device for transporting the insulating glass element in a transport direction and a movably formed device for expelling a strand of the sealing compound into the edge joint of the insulating glass element, and
wherein the control device is formed in such a way that it can trigger drive means of the transport device and the device for expelling a strand of the sealing compound in such a way that the edge joint of the insulating glass element is filled with the sealing compound according to the method according to one of the claims 1 to 6.

## Revendications

1. Procédé de remplissage d'un joint de bord d'un élément de vitrage isolant par une composition de scellement,
dans lequel on éjecte la composition de scellement sous la forme d'un boudin d'au moins une buse dans le joint de bord et on y forme un cordon de composition de scellement ininterrompu et s'étendant autour du pourtour de l'élément de vitrage isolant, en déplaçant l'élément de vitrage isolant et la au moins une buse l'un par rapport à l'autre,
dans lequel on forme le cordon de composition de scellement de manière discontinue en plusieurs segments, dont on forme au moins un premier segment par le déplacement relatif dans un premier sens de pourtour de l'élément de vitrage isolant et au moins un deuxième segment par le déplacement relatif dans un deuxième sens de pourtour contraire au premier sens de pourtour,
dans lequel on forme chaque liaison de segments du cordon de la composition de scellement, qui se trouve à une partie du grand côté du pourtour de l'élément de vitrage isolant, en mettant le boudin de la composition de scellement dans la région de l'extrémité d'un cordon de composition de scellement se trouvant déjà dans le joint de bord et en le formant, en s'éloignant de cette extrémité, par le déplacement relatif et
**caractérisé en ce que**
chaque liaison de segments du cordon de la composition de scellement, formée par le fait que le boudin de la composition de scellement est introduit par le déplacement relatif vers l'extrémité d'un boudin de la composition de scellement se trouvant déjà dans le joint de bord, se trouve sur une région de coin de deux parties de grands côtés de l'élément de vitrage isolant.

2. Procédé suivant la revendication 1, dans lequel on maintient fixe l'élément de vitrage isolant, pendant le remplissage du joint de bord, par les segments du cordon de la masse de scellement et on déplace la buse, et dans lequel on remet, de préférence dans un sens de transport de l'élément de vitrage isolant, l'élément de vitrage isolant, entre le remplissage du joint de bord par les segments, au moins une fois dans sa position.

3. Procédé suivant l'une des revendications 1 à 2, dans lequel le point de début du premier segment du cordon de la composition de scellement se trouve sur une partie de grand côté du pourtour de l'élément de vitrage isolant et le deuxième segment commence également dans la région du point de début du premier segment.

4. Procédé suivant l'une des revendications 1 à 3, dans lequel le cordon de la composition de scellement est formé de N premiers segments et de (N-1) deuxièmes segments et N est un nombre entier et >2.

5. Procédé suivant l'une des revendications 1 à 4, dans lequel on forme les premiers et deuxièmes segments du cordon de la composition de scellement par la même buse ou respectivement par une buse propre.

6. Procédé suivant l'une des revendications 1 à 5, dans lequel l'élément de vitrage isolant est, lors du remplissage du joint de bord par la composition de scellement, monté sensiblement verticalement et le changement de position de l'élément de vitrage isolant s'effectue en un mouvement de translation.

7. Installation de remplissage d'un joint de bord d'un élément de vitrage isolant par une composition de scellement, comprenant :
une buse ayant une ouverture de sortie pour éjecter un boudin de la composition de scellement dans le joint de bord de l'élément de vitrage isolant lors d'un déplacement relatif entre la buse et l'élément de vitrage isolant,
un élément de guidage, qui est associé à l'ouverture de sortie et qui est conformé pour être guidé en utilisation sur un bord de l'élément de vitrage isolant et pour empêcher la composition de scellement, introduite dans le joint de bord, de s'échapper latéralement,
et un agencement de capteur pour déterminer la profondeur du joint de bord,
dans laquelle l'ouverture de sortie de la buse et l'élément de guidage sont conformés, de manière à pouvoir introduire le boudin dans le joint de bord dans des sens de déplacement relatif contraires.

8. Installation suivant la revendication 7, dans laquelle l'ouverture de sortie et l'élément de guidage sont constitués et disposés symétriquement, de manière à pouvoir éjecter le boudin et l'introduire dans le joint de bord, conformément aux sens de déplacement relatif contraires.

9. Installation suivant la revendication 8, dans laquelle l'élément de guidage est constitué aux deux extrémités opposées dans le sens de déplacement, en ayant des parties d'extrémité chanfreinées à la manière d'une pale.

10. Installation suivant la revendication 7, dans laquelle l'ouverture de sortie et l'élément de guidage peuvent être déplacés, de préférence en pivotant, entre deux positions de travail correspondant aux sens de déplacement relatif contraires.

11. Installation suivant l'une des revendications 7 à 10, dans laquelle l'agencement de capteur a, soit un capteur pour chacun des deux sens de déplacement relatif contraires, soit un capteur, qui peut se déplacer, de préférence en pivotant, entre deux positions de travail correspondant aux sens de déplacement relatif contraires.

12. Installation suivant la revendication 11, dans laquelle le capteur est formé par une sonde de contact montée mobile, dont la déviation peut être prise comme mesure de la profondeur du joint de bord.

13. Dispositif de commande d'une installation de remplissage d'un joint de bord d'un élément de vitrage isolant par une composition de scellement, l'installation comprenant un dispositif de transport pour transporter l'élément de vitrage isolant dans un sens de transport et un dispositif conformé de manière à pouvoir être déplacé, pour éjecter un boudin de la composition de scellement dans le joint de bord de l'élément de vitrage isolant et
dans lequel le dispositif de commande est conçu pour commander des moyens d'entraînement du dispositif de transport et du dispositif d'éjection d'un boudin de la composition de scellement, de manière à remplir le joint de bord de l'élément de vitrage isolant de la composition de scellement selon le procédé suivant l'une des revendications 1 à 6.
